# EUROPEAN PATENT SPECIFICATION

(11) **EP 1 632 400 B1**
(45) Date of publication and mention of the grant of the patent: **13.06.2007**
(21) Application number: 05017131.3
(22) Date of filing: 05.08.2005
(51) Int. Cl.: B60R 21/0134

(54) **Lane deviation warning**
Spurabweichwarnung
Alerte de déviation hors de la voie

(30) Priority: 01.09.2004 JP 2004254155
(43) Date of publication of application: 08.03.2006
(73) Proprietor: Mazda Motor Corporation, Aki-gun, Hiroshima 730-8670 (JP)
(72) Inventor: Oka, Takuji, Aki-gun Hiroshima 730-8670 (JP); Murai, Takeshi, Aki-gun Hiroshima 730-8670 (JP)
(74) Representative: Müller-Boré & Partner Patentanwälte

(56) References cited:
- WO-A-20/04065182
- US-A1- 2002 198 643
- US-A1- 2003 139 883
- PATENT ABSTRACTS OF JAPAN vol. 2002, no. 04, 4 August 2002 (2002-08-04) & JP 2001 341599 A (NISSAN MOTOR CO LTD), 11 December 2001 (2001-12-11)

## Description

The present invention relates to a lane deviation warning device for a vehicle, a lane deviation warning control method and computer program product which warn a passenger when a traveling vehicle deviates from a lane.

Conventionally, this kind of lane deviation warning devices are well known. In these devices, a separation line (white line) of the traveling lane is detected by a camera picking up an image of the lane in front of the traveling vehicle, a position of the vehicle traveling with respect to the lane in a width direction is detected based on the detected separation line, and it is determined by the detected vehicle position with respect to the lane whether or not the vehicle deviates from the lane. When the vehicle's lane deviation is determined, the passenger is warned with a phone or vibrations of a seat or a front carpet (see, for example, Japanese Utility Model Laid-Open Publication No. 7-23651, Japanese Patent Laid-Open Publication No. 2001-341599).

However, the conventional devices just warn the passenger, and other countermeasures to the passenger who would not take any actions ignoring the warning are not taken basically. Namely, in a case, for example, where there exists a slope beside the traveling road, the vehicle would continue to travel on the slope and thereby there would be a risk of an occurrence of a vehicle rollover after the vehicle deviates from the lane. Or, in a case where another vehicle is parked at the side of the road, there would be a risk of a vehicle crash against the parked vehicle. Therefore, it is preferable that some proper actions should be taken in advance for those risks. US-A-2002/0198643 shows the features of the preamble of claims 1 and 8.

The present invention has been devised in view of the above-described problem, and an object of the present invention is to further improve the safety of the passenger in case of the vehicle lane deviation.

This object is solved by the features of the independent claims. Preferred embodiments of the present invention are subject of the dependent claims.

According to the present invention, there is provided a lane deviation warning device for a vehicle, comprising a relative position detecting device operative to detect a position of the vehicle traveling on a road with respect to a lane in a width direction, a lane deviation determining device operative to determine whether or not the traveling vehicle deviates from the lane based on the relative position detected by said relative position detecting device, and a warning device operative to warn a passenger when the lane deviation is determined by said lane deviation determining device, wherein said warning device comprises a control device operative to operate at least one belt winder, which can wind up a seat belt provided to the passenger to apply a specified (predetermined or predeterminable) tension to the seat belt, when the lane deviation of the vehicle is determined by said lane deviation determining device, and said warning device warns the passenger by operating the belt winder to apply the specified (predetermined or predeterminable) tension to the seat belt of the passenger with the operation of said belt winder.

Accordingly, since the passenger is pressed against the seat back of the seat by the seat belt with the specified (predetermined or predeterminable) tension applied thereto, the passenger can notice an likelihood of the vehicle lane deviation easily and thereby the passenger can take any necessary actions promptly to avoid the vehicle lane deviation. Further, even if the passenger did not notice the likelihood of the vehicle lane deviation, the above-described belt winder can perform the function of applying the specified (predetermined or predeterminable) tension to the seat belt which is similar to a belt tensioner. Thereby, the passenger can be restrained in advance preparing for the vehicle overall, crash or the like, thereby improving the safety of the passenger.

According to a preferred embodiment of the invention, there is provided a lane deviation warning device of a vehicle comprising a relative position detecting device operative to detect a position of the vehicle traveling on a road with respect to a lane in a width direction, a lane deviation determining device operative to determine whether or not the traveling vehicle deviates from the lane based on the relative position detected by the relative position detecting device, a warning device operative to warn a passenger when the lane deviation is determined by the lane deviation determining device, wherein the warning device comprises a belt winder operative to wind up a seat belt provided to the passenger to apply a specified tension to the seat belt and a control device operative to operate the belt winder when the lane deviation of the vehicle is determined by the lane deviation determining device, and the warning device warns the passenger by applying the specified tension to the seat belt of the passenger with the operation of the belt winder.

According to a preferred embodiment of the present invention, there is further provided a critical condition determining device operative to determine in advance whether or not the vehicle will have a critical condition after the vehicle deviates from the lane when the lane deviation of the vehicle is determined by the lane deviation determining device, wherein the control device is constituted so as to operate the belt winder when it is determined by the critical condition determining device that the vehicle will have the critical condition, whereby the warning device warns the passenger by applying the specified (predetermined or predeterminable) tension to the seat belt when it is determined by the critical condition determining device that the vehicle will have the critical condition. Accordingly, since the belt winder is operated when it is determined by the critical condition determining device that the vehicle will have the critical condition, the passenger can be warned surely and properly by applying the specified (predetermined or predeterminable) tension to the seat belt when the critical condition of the vehicle is determined.

According to another preferred embodiment of the present invention, the above-described critical condition determining device is constituted so as to determine in advance whether or not the vehicle will have the critical condition, by determining whether a risk of an occurrence of a vehicle rollover after the vehicle deviates from the lane is high or not. Accordingly, the passenger can be properly restrained in advance especially preparing for the vehicle overall, thereby improving the safety of the passenger.

According to another preferred embodiment of the present invention, the above-described warning device is constituted so as to keep applying the specified (predetermined or predeterminable) tension to the seat belt at least until it is determined by the lane deviation determining device that the vehicle does not deviate from the lane. Accordingly, the safety of the passenger can be ensured surely.

According to another preferred embodiment of the present invention, there is provided an image pick-up device operative to pick up an image of at least part of the road substantially in front of the vehicle, and the above-described critical condition determining device is constituted so as to determine in advance whether or not the vehicle will have the critical condition based on the picked-up image by the image pick-up device. Accordingly, since any configurations of the ground or any obstacles around or on the road in front of or close to the traveling vehicle after the vehicle lane deviation are detected easily by dealing with the picked-up image by the pick-up device, the determination as to whether or not the vehicle will have the critical condition after the vehicle lane deviation can be made easily and surely.

According to another preferred embodiment of the present invention, the critical condition determining device is constituted so as to determine in advance whether or not the vehicle will have the critical condition based on the picked-up image by said image pick-up device which is an image around or close to the road or path where the vehicle will travel after the lane deviation. Accordingly, for example, the likelihood of the vehicle rollover is determined based on the road image (such as ground configurations), and the determination as to whether or not the vehicle will have the critical condition can be made easily.

According to another preferred embodiment of the present invention, there is provided a vehicle speed detecting device operative to detect a vehicle traveling speed, and the critical condition determining device is constituted so as to determine in advance whether or not the vehicle will have the critical condition based on the picked-up image by the image pick-up device and the vehicle traveling speed by the vehicle speed detecting device. Accordingly, since the determination as to whether or not the vehicle will have the critical condition is made further considering the vehicle traveling speed, the determination can be made accurate.

According to the invention, there is further provided a lane deviation warning control method for a vehicle, in particular for use in connection with the lane deviation warning device according to the invention or a preferred embodiment thereof, comprising the following steps:
a relative position detecting step of detecting a position of the vehicle traveling on a road with respect to a lane in a width direction;
a lane deviation determining step determining whether or not the traveling vehicle deviates from the lane based on the relative position detected in said relative position detecting step;
a warning step of warning a passenger when the lane deviation is determined in said lane deviation determining step,
wherein said warning step comprises a step of operating at least one belt winder, which can wind up a seat belt provided to the passenger to apply a specified tension to the seat belt, when the lane deviation of the vehicle is determined in said lane deviation determining step, and wherein the passenger is warned by operating the belt winder to apply the specified tension to the seat belt of the passenger with the operation of said belt winder.

According to a preferred embodiment of the invention, the lane deviation warning method for a vehicle further comprises a critical condition determining step of determining in advance whether or not the vehicle will have a critical condition after the vehicle deviates from the lane when the lane deviation of the vehicle is determined in said lane deviation determining step,
wherein said belt winder is operated when it is determined in said critical condition determining step that the vehicle will have the critical condition, whereby the passenger is warned by applying the specified tension to the seat belt when it is determined by said critical condition determining device that the vehicle will have the critical condition.

According to the invention, there is further provided a computer program product comprising computer-readable instructions which, when loaded and run on a suitable system can perform the steps of a lane deviation warning method for a vehicle according to the invention or a preferred embodiment thereof.

Other features, aspects, and advantages of the present invention will become apparent from the following description which refers to the accompanying drawings.
FIG. 1 is a schematically perspective view illustrating an entire structure of a vehicle equipped with a lane deviation warning device of a vehicle according to an embodiment of the present invention.
FIG. 2 is an explanatory diagram illustrating a structure of a seat belt device.
FIG. 3 is block diagram illustrating a structure of the lane deviation warning device.
FIG. 4 is a flowchart of a control processing by a control unit.
FIG. 5 is a perspective view illustrating a scene where there exists a slope beside a traveling road which rises slant from the road surface.

Hereinafter, preferred embodiments of the present invention will be described referring to the accompanying drawings. It should be understood that even though embodiments are separately described, single features thereof may be combined to additional embodiments.

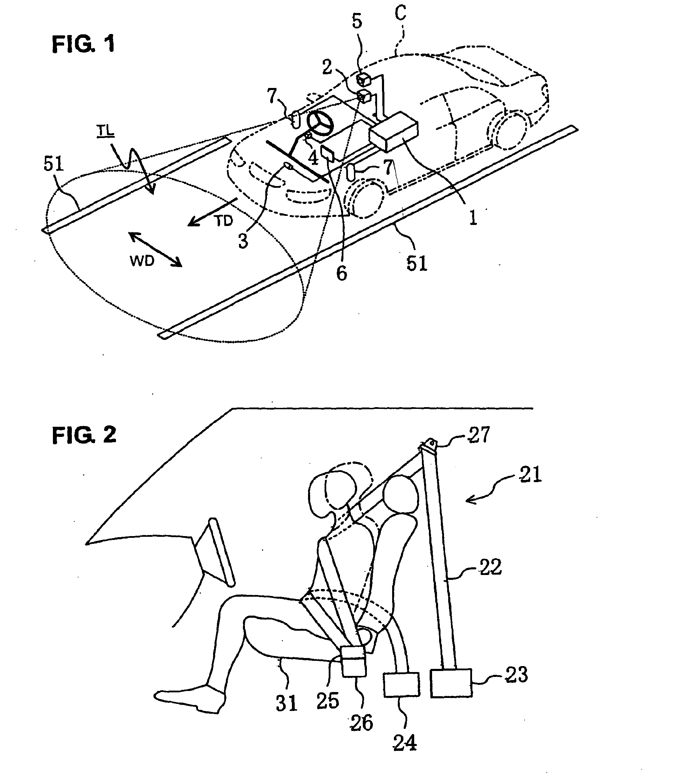

FIG. 1 illustrates the entire structure of a vehicle C (automotive vehicle) equipped with a lane deviation warning device according to a preferred embodiment of the present invention. A reference numeral 1 denotes a control unit to control the lane deviation warning device. A reference numeral 2 denotes a first sensing device (preferably comprising a first CCD camera) to sense a lane, preferably to pick up an image of a lane substantially in front of the traveling vehicle C. A reference numeral 3 denotes a vehicle speed sensor as a vehicle speed detecting device. A reference numeral 4 denotes a steering angle sensor as a steering angle detecting device to detect a steering angle of the vehicle C, preferably of a steering wheel operated by a passenger (driver). A reference numeral 5 denotes a second sensing device (preferably comprising a second CCD camera) to sense a portion of a road, preferably as an image pick-up device to pick up an image of the road (front and/or a side portion, preferably both sides of the road) adjacent or in front of the vehicle C. These first CCD camera 2, vehicle speed sensor 3, steering angle sensor 4 and second CCD camera 5 are coupled to the control unit 1 so as to output respective detecting information to the control unit 1. Herein, the function of the above-described second CCD camera may be at least partly performed by the first CCD camera, preferably resulting in a single CCD camera (as a preferred single sensing device). Meanwhile, the second CCD camera 5 may be composed of two or more cameras, each of which picks up an image of front and/or one side of the road.

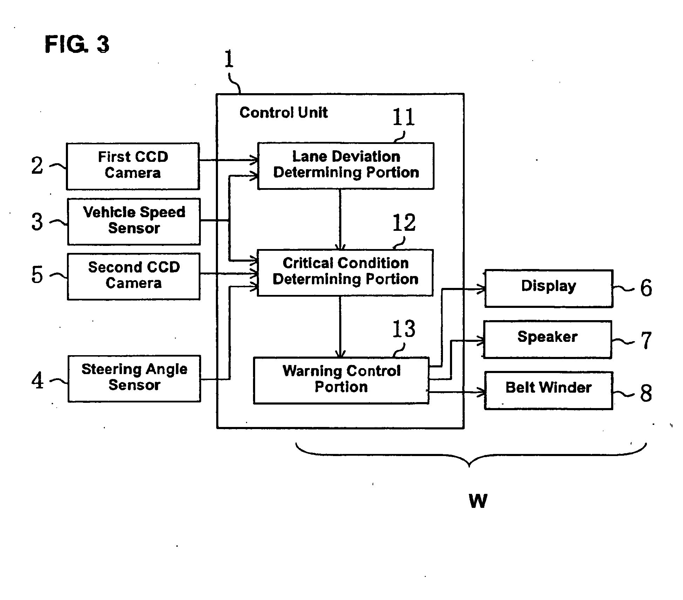

Also, in FIG. 1, a reference numeral 6 denotes a warning device (preferably comprising a display) to warn the passenger of the lane deviation of the vehicle C, and a reference numeral 7 denotes a speaker to warn the passenger of the vehicle lane deviation by a sound or audible announcement. These display 6 and speaker 7 are coupled to the control unit 1, and a control operation described below is executed by a warning control device 13 (see FIG. 3), which will be described below, of the control unit 1.

FIG. 2 illustrates a seat belt device 21 installed into the vehicle C. The seat belt device 21 is provided at least to the passenger (driver) in a driver's seat 31, and a similar seat belt device to this is or may be also provided to any other passengers in an assistant seat and other seat(s) e.g. back seat(s).

The seat belt device 21 preferably is a three-point type of seat belt, which comprises a retractor 23 which winds up a seat belt 22, a lap anchor 24 to which a tip of the seat belt 22 drawn from the retractor 23 is attached, and a buckle 26 with which a tongue 25 provided at an intermediate or middle portion of the seat belt 22 is detachably or movably engaged. The buckle 26 is to be fixed to a vehicle body inside or near the seat 31, and the retractor 23 and lap anchor 24 are to be fixed to a vehicle body outside the seat 31 or at a distance therefrom.

The seat belt 22 drawn from the retractor 23 is guided by a slip guide 27 which is provided at an outside and top portion of the seat 31 so as to change its drawing direction from substantially upward (e.g. substantially along the B-post) to downward and/or forward (e.g. substantially towards the seat 31). Then, its end tip is to be fixed to the lap anchor 24. The tongue 25 is provided between the slip guide 27 and the lap anchor 24 so as to slide on or substantially along the seat belt 22, and the seat belt 22 is provided for the passenger by engaging the tongue 25 with the buckle 26.

There is provided at the retractor 23 a belt winder 8 (see FIG. 3) which winds up part of the seat belt 22 at the passenger and thereby can apply a specified (predetermined or predeterminable) tension (preferably a tension to enable a driving operation and restrain the passenger properly) to the seat belt 22, which is not illustrated in FIG. 2. The belt winder 8 has a structure which is similar to the well-known electric or fluid pretensioner to apply the tension to the seat belt 22 before the crash of the vehicle C. This belt winder 8 is so controlled by the control unit 1 as described below that it can warn and/or properly restrain the passenger with the seat belt 22 of the vehicle lane deviation and/or properly restrain the passenger upon occurrence of the vehicle lane deviation.

As illustrated in FIG. 3, the image data picked up by the first CCD camera 2 and preferably the vehicle speed data detected by the vehicle speed sensor 3 are inputted to a lane deviation determining portion 11 of the control unit 1. The lane deviation determining portion 11 determines whether or not the traveling vehicle C deviates from the lane based on the data of image and preferably vehicle speed. Namely, a frontward-watching distance L is calculated according to the vehicle speed detected by the vehicle speed sensor 3. A partition line or element of the traveling lane TL (for example, a white line 51 in FIG. 1 or lane posts or a guardrail) is detected through the general processing of the picked-up image by the first CCD camera 2. Then, a lateral position deviation dy0 (namely, a lateral position of the vehicle C with respect to the traveling lane TL) of a reference line (preferably the center line) of the vehicle C with respect to the target traveling path in the width direction WD (herein, a reference or center line of the traveling lane TL) which is obtained based on the detected partition line or element, an angle between the traveling direction TD of the vehicle C and the traveling lane, and the width of the lane TL are detected respectively. Thus, the first CCD camera 2 preferably forms part of a relative position detecting device to detect the relative position of the vehicle traveling on the road with respect to the lane TL in the width direction WD. And, a prediction value dy1 (hereinafter, referred to as "future lateral position") of the lateral position deviation at the frontward-watching distance L is calculated based on the above-described target traveling path, lateral position deviation dy0 and/or angle between the traveling direction TD of the vehicle C and the traveling lane TL (since this calculation is generally known, its detailed description is omitted here). When the calculated future lateral position dy1 is greater than a (predetermined or predeterminable) threshold D (the threshold D preferably has a greater value as the lane width becomes wide) for the lane deviation determination, it is determined that the traveling vehicle C deviates from the lane TL (namely, the lane deviation is predicted). Meanwhile, when the calculated future lateral position dy1 is smaller than the threshold D, it is determined that the traveling vehicle C does not deviate from the lane TL. Thus, the lane deviation determining portion 11 preferably forms part of a lane deviation determining device operative to determine where or not the traveling vehicle C deviates from the lane TL based on the relative position detected by the relative position detecting device.

When it is determined by the lane deviation determining portion 11 that the vehicle C deviates from the lane TL (the lane deviation is predicted), a critical condition determining portion 12 preferably determines in advance whether or not the vehicle C will have a critical condition after the vehicle lane deviation. Namely, the vehicle speed data detected by the vehicle speed sensor 3, steering angle data detected by the steering angle sensor 4, and/or sensing or image data picked up preferably by the second CCD camera 5 are inputted to the critical condition determining portion 12. The critical condition determining portion 12 determines based on these data whether or not the vehicle C will have the critical condition after the vehicle lane deviation. Thus, the critical condition determining portion 12 constitutes a critical condition determining device operative to determine whether or not the vehicle C will have the critical condition after the vehicle lane deviation.

The critical condition determination by the critical condition determining portion 12 will be described more in detail. The critical condition determining portion 12 determines based on the above-described inputted data whether a risk of an occurrence of an unstable state of the vehicle C (such as a vehicle rollover) after the vehicle C deviates from the lane TI is high or not, and/or whether a risk of an occurrence of a vehicle crash against an obstacle after the vehicle C deviates from the lane TL is high or not. The determination as to whether or not the vehicle C will have the critical condition is made based on results of the above-described determination. Namely, when it is determined that risks of the unstable state of the vehicle C (e.g. the vehicle rollover) and/or the vehicle crash are high (or above a specified threshold), it is determined that the vehicle C will have the critical condition.

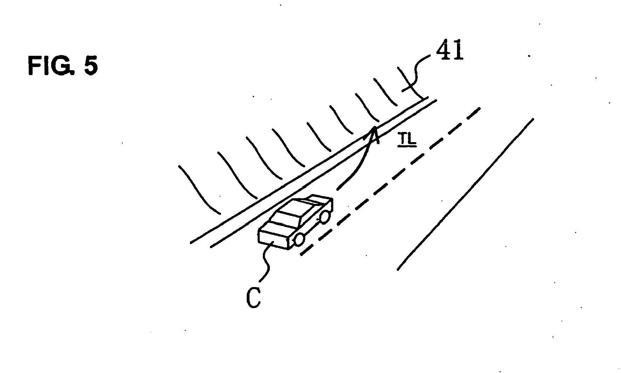

The determination as to whether the risks of the unstable state of the vehicle C (e.g. the vehicle rollover) and/or the vehicle crash are high or not is made, for example, in the following manner. Namely, it is determined based on the sensing data (preferably the image data) picket up preferably by the second CCD camera 5 (as the second preferred sensing device) as to how a configuration of the ground where the traveling vehicle C will travel after the vehicle lane deviation is. For example, if it is determined that the ground configuration predicted is that there exists a slope 41 beside the traveling road which rises slant from the road surface as illustrated in FIG. 5, it is determined that the vehicle C would continue to travel on the slope and thereby there would be a high risk of the vehicle rollover. Herein, it is preferable that this high risk of the vehicle rollover is determined in case that the vehicle speed detected by the vehicle speed sensor 3 (or, the vehicle speed at the time the vehicle C deviates from the lane TL) is higher than a specified (predetermined or predeterminable) speed. Further, an angle (hereinafter, referred to as "a lane deviation angle") between the traveling direction TD of the vehicle C and the traveling lane TL at the time the vehicle C deviates from the lane TL may be obtained, preferably considering the steering angle. And, the high risk of the vehicle rollover may be determined in case that the lane deviation angle and the vehicle speed are greater than respective specified (predetermined or predeterminable) values.

Also, if it is determined based on the image data picket up by the second CCD camera 5 that there exists an obstacle, such as a tunnel wall or another vehicle, a tree, a traffic sign, a bridge post, a building or the like, where the traveling vehicle C will travel after the vehicle lane deviation, it is determined that there would be a high risk of the vehicle crash against such obstacles. Herein, an existence information of the obstacle (e.g. the tunnel wall, bridge post and/or a building) may be alternatively or additionally obtained according to a navigation system or the like. And, an existence information of another vehicle or other obstacle (such as a tree, a traffic sign or the like) may be obtained according to a scanning radar device or the like.

Further, if it is determined based on the image data picket up by the second CCD camera 5 that there exists a guide rail where the traveling vehicle C will travel after the vehicle lane deviation, it is not determined that there would be a high risk of the vehicle rollover even though the slope 41 exits there. However, in case that the above-described lane deviation angle and the vehicle speed are greater than respective specified values, it is determined that a risk of the vehicle crash against the guard rail is high.

When it is determined by the critical condition determining portion 12 that the vehicle C will have the critical condition, a warning control portion 13 preferably operates the belt winder 8. Thus, the belt winder 8 applies the specified (predetermined or predeterminable) tension to the seat belt 22, thereby warning the passenger of the vehicle lane deviation and/or pretensioning the belt 22 so as to enhance the safety function of the belt 22, in particular by positioning the passenger substantially properly (e.g. in a substantially upright position with his back close to the back seat of the passenger seat 31). Herein, the applying of the specified (predetermined or predeterminable) tension to the seat belt 22 is kept until it is determined by the lane deviation determining portion 11 that the vehicle C does not deviate from the lane TL.

Meanwhile, when it is determined that the vehicle C will not have the critical condition, the warning control portion 13 operates the display 6 and/or the speaker 7, and thereby the display warning and/or the sound warning are performed. Namely, according to the present embodiment, when the vehicle C is not in so critical condition, the critical condition determining portion 12 further determines whether the critical condition is in a middle level or a low level. When it is determined that the critical condition is in the low level (for example, when the vehicle speed is lower than a standard speed), a warning operation with a low warning level is performed, preferably the display warning with the display 6 is performed by the warning control portion 13. Meanwhile, when it is determined that the critical condition is in the middle level (for example, when the vehicle speed is higher than the standard speed), a warning operation with a higher warning level is performed, preferably the sound warning with the speaker 7 is performed by the warning control portion 13 in addition or alternatively to the display warning. Thus, these display 6, speaker 7, belt winder 8 and warning control portion 13 form at least part of a warning device W which warns the passenger when the lane deviation is determined by the lane deviation determining device. In other words, the warning is preferably performed by the warning device W with a plurality of warning operations depending on the level of critical condition (e.g. low, medium, high).

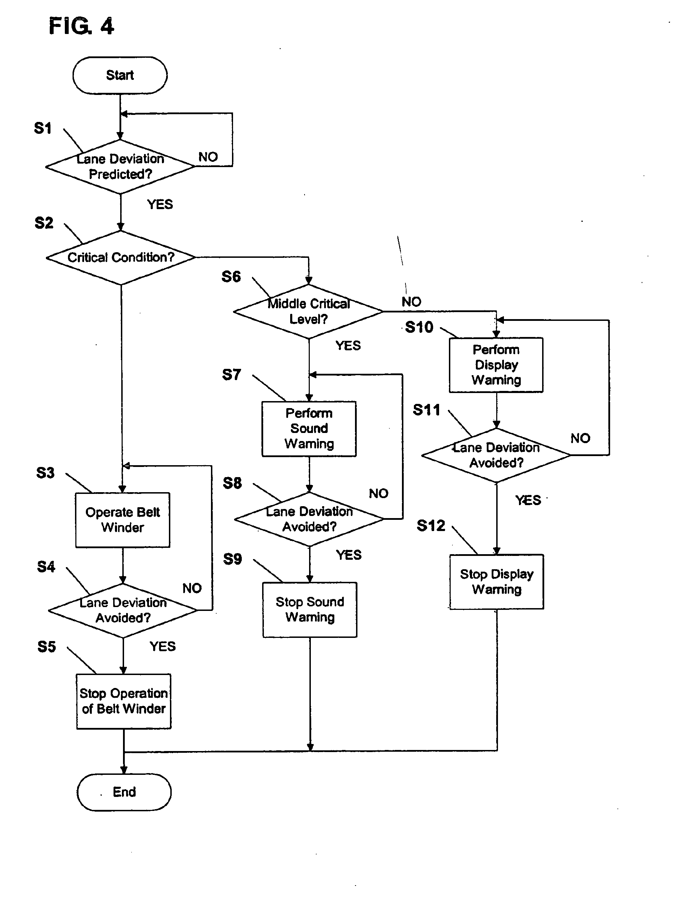

Hereinafter, the control processing of the control unit 1 will be described referring to a flowchart of FIG. 4.

At first, in step S1, it is determined by the lane deviation determining portion 11 whether or not the vehicle C deviates from the lane TL (whether or not the vehicle lane deviation is predicted). When the answer to the step S1 is NO, the control sequence returns to the step S1. When the answer to step S1 is YES, the control sequence proceeds to step S2.

In the step S2, it is determined by the critical condition determining portion 12 whether or not the vehicle C will have the critical condition after the vehicle lane deviation. When the answer to the step S2 is YES, the control sequence proceeds to step S3. When the answer to the step S2 is NO (when the critical condition is in the middle or low levels), the control sequence proceeds to step S6.

In the step S3, the warning control portion 13 warns the passenger with the belt winder 8. Namely, the belt winder 8 is operated and the specified (predetermined or predeterminable) tension is applied to the seat belt 22 provided to the passenger. Then, in step S4, it is determined whether or not the vehicle lane deviation is avoided, i.e., whether or not the lane deviation determining portion 11 determines that the vehicle C does not deviate from the lane TL. When the answer to the step S4 is NO, the control sequence retunes to the step S3. When the answer to the step S4 is YES, the control sequence proceeds to step S5, where the operation of the belt winder 8 is stopped and the control ends. Alternatively, the operation of the belt winder 8 may be upheld or maintained for a specified (predetermined or predeterminable) period of time after the answer to the step S4 is YES, i.e. the lane deviation determining portion 11 determines that the vehicle C does not (or no longer) deviate from the lane TL.

In the step S6, it is determined by the critical condition determining portion 12 whether or not the critical condition of the vehicle C is in the middle or intermediate level. When the answer to the step S6 is YES, the control sequence proceeds to step S7, where the sound warning with the speaker 7 is performed (additionally or alternatively to the display warning, not shown in the flowchart) by the warning control portion 13. Next, in step S8, the determination as to whether the lane deviation is avoided or not is made. When the answer to the step S8 is NO, the control sequence returns to the step S7. When the answer to the step S8 is YES, the control sequence proceeds to step S9, where the operation of the sound warning is stopped and the control ends.

Meanwhile, when the answer to the step S6 is NO (the critical condition is in the middle level), the control sequence proceeds to step S10, where the display warning with the display 6 is performed by the warning control portion 13. Next, in step S11, the determination as to whether the lane deviation is avoided or not is made. When the answer to the step S11 is NO, the control sequence returns to the step S10. When the answer to the step S11 is YES, the control sequence proceeds to step S12, where the operation of the display warning is stopped and the control ends.

Thus, when it is determined by the control operation of the control unit 1 that the vehicle C deviates from the running or traveling lane TL, it is determined whether or not the vehicle C will have the critical condition after the vehicle lane deviation. When the determination that the vehicle C will have the critical condition is made, the belt winder 8 is operated (preferably additionally to the display and/or sound warning, not shown in the flowchart) and the specified (predetermined or predeterminable) tension is applied to the seat belt 22. Thereby, the passenger of the vehicle C is pressed towards or against the seat back of the seat 31 ,as illustrated by a dash-dotted line in FIG. 2. Accordingly, since a pressing stimulation is directly applied to the passenger, the passenger can notice the likelihood of the vehicle lane deviation easily and thereby the passenger can take some necessary actions promptly to avoid the vehicle lane deviation. Further, even if the passenger did not notice the likelihood of the vehicle lane deviation, the passenger can be restrained by the seat belt substantially properly in advance preparing for the vehicle crash or the vehicle, thereby improving the safety of the passenger.

When the critical condition is in the middle level or the low level, the sound warning and/or the display warning are performed. Accordingly, the passenger can be warned properly according to the level of the vehicle critical condition.

Herein, although the belt winder 8 is operated to apply the specified (predetermined or predeterminable) tension to the seat belt 22 when it is determined by the critical condition determining portion 12 that the vehicle C will have the critical condition in the above-described embodiment, the belt winder 8 may be operated when it is determined that the vehicle C deviates from the lane TL. Namely, when it is determined by the lane deviation determining portion 11 that the vehicle C deviates from the lane TL, the warning control portion 13 warns the passenger with the operation of the belt winder 8. Thus, whenever the vehicle lane deviation is determined, the specified (predetermined or predeterminable) tension is applied to the seat belt 22 and thereby the vehicle lane deviation warning is performed. Accordingly, the safety of the passenger can be ensured surely. Also, in case that the second CCD camera 5 for the critical condition determining portion 12 is omitted, there can be provided the critical condition determining portion 12 with reduced costs.

Also, whenever the lane deviation warning with the belt winder 8 is performed, the display and/or sound warning may be configured so as to be performed.

Accordingly, when it is determined by the lane deviation determining portion 11 that the vehicle C deviates from the lane TL and then it is determined by the critical condition determining portion 12 that the vehicle C will have the critical condition, the warning control portion 13 operates the belt winder 8 so as to wind up the seat belt 22 and thereby apply the specified tension to the seat belt 22. Accordingly, the passenger is warned with the tension applied to the seat belt 22.

The invention is defined by the appended claims only.

## Claims

1. A lane deviation warning device for a vehicle (C), comprising:
a relative position detecting device (2) operative to detect a position of the vehicle (C) traveling on a road with respect to a lane (51, TL) in a width direction (WD);
a lane deviation determining device (11) operative to determine whether or not the traveling vehicle (C) deviates from the lane (51, TL) based on the relative position detected by said relative position detecting device (2); and
a warning device (W) operative to warn a passenger when the lane deviation is determined by said lane deviation determining device (11), **characterised in that**
said warning device (W) comprises a control device (13) operative to operate at least one belt winder (8), which can wind up a seat belt (22) provided to the passenger to apply a specified tension to the seat belt (22), when the lane deviation of the vehicle (C) is determined by said lane deviation determining device (11), and said warning device (W) warns the passenger by operating the belt winder (8) to apply the specified tension to the seat belt (22) of the passenger with the operation of said belt winder (8).

2. The lane deviation warning device for a vehicle (C) of claim 1, further comprising a critical condition determining device (12) operative to determine in advance whether or not the vehicle (C) will have a critical condition after the vehicle (C) deviates from the lane (51, TL) when the lane deviation of the vehicle (C) is determined by said lane deviation determining device (11),
wherein said control device (13) is constituted so as to operate said belt winder (8) when it is determined by said critical condition determining device (12) that the vehicle (C) will have the critical condition, whereby said warning device (W) warns the passenger by applying the specified tension to the seat belt (22) when it is determined by said critical condition determining device (12) that the vehicle (C) will have the critical condition.

3. The lane deviation warning device for a vehicle (C) of claim 2, wherein said critical condition determining device (12) is constituted so as to determine in advance whether or not the vehicle (C) will have the critical condition, by determining whether a risk of an occurrence of a vehicle rollover after the vehicle (C) deviates from the lane is high or not.

4. The lane deviation warning device for a vehicle (C) of claims 2 or 3, wherein said warning device (W) is constituted so as to keep applying the specified tension to the seat belt (22) at least until it is determined by said lane deviation determining device (11) that the vehicle (C) does not deviate from the lane (51).

5. The lane deviation warning device for a vehicle (C) of any one of claims 2 through 4, wherein there is provided an image pick-up device (5) operative to pick up an image of at least part of the road substantially in front of the vehicle (C), and said critical condition determining device (12) is constituted so as to determine in advance whether or not the vehicle (C) will have the critical condition based on the picked-up image by said image pick-up device (5).

6. The lane deviation warning device for a vehicle (C) of claim 5, wherein said critical condition determining device (12) is constituted so as to determine in advance whether or not the vehicle (C) will have the critical condition based on the picked-up image by said image pick-up device (5) which is an image around the road where the vehicle. (C) will travel after the lane deviation.

7. The lane deviation warning device for a vehicle (C) of claims 5 or 6, wherein there is provided a vehicle speed detecting device (3) operative to detect a vehicle traveling speed, and said critical condition determining device (12) is constituted so as to determine in advance whether or not the vehicle (C) will have the critical condition based on the picked-up image by said image pick-up device (5) and the vehicle traveling speed by said vehicle speed detecting device (3).

8. A lane deviation warning control method for a vehicle (C), comprising the following steps:
a relative position detecting step of detecting a position of the vehicle (C) traveling on a road with respect to a lane (51, TL) in a width direction (WD);
a lane deviation determining step determining whether or not the traveling vehicle (C) deviates from the lane (51, TL) based on the relative position detected in said relative position detecting step;
a warning step of warning a passenger when the lane deviation is determined in said lane deviation determining step, **characterised in that**
said warning step comprises a step of operating at least one belt winder (8), which can wind up a seat belt (22) provided to the passenger to apply a specified tension to the seat belt (22), when the lane deviation of the vehicle (C) is determined in said lane deviation determining step, and wherein the passenger is warned by operating the belt winder (8) to apply the specified tension to the seat belt (22) of the passenger with the operation of said belt winder (8).

9. The lane deviation warning method for a vehicle (C) of claim 8, further comprising a critical condition determining step of determining in advance whether or not the vehicle (C) will have a critical condition after the vehicle (C) deviates from the lane (51, TL) when the lane deviation of the vehicle (C) is determined in said lane deviation determining step,
wherein said belt winder (8) is operated when it is determined in said critical condition determining step that the vehicle (C) will have the critical condition, whereby the passenger is warned by applying the specified tension to the seat belt (22) when it is determined by said critical condition determining device (12) that the vehicle (C) will have the critical condition.

10. A computer program product comprising computer-readable instructions which, when loaded and run on a suitable system can perform the steps of a lane deviation warning method for a vehicle (C) according to claim 8 or 9.

## Patentansprüche

1. Spurabweichwarnvorrichtung für ein Fahrzeug (C), umfassend:
eine eine relative Position detektierende Vorrichtung (2), welche operativ ist bzw. arbeitet, um eine Position des Fahrzeugs (C), welches auf einer Straße fährt, in bezug auf eine Spur bzw. Fahrspur (51, TL) in einer Breitenrichtung (WD) zu detektieren;
eine eine Spurabweichung bestimmende Vorrichtung (11), welche operativ ist bzw. arbeitet, um basierend auf der relativen Position, welche durch die die relative Position detektierende Vorrichtung (2) detektiert ist, zu bestimmen, ob das fahrende Fahrzeug (C) von der Spur (51, TL) abweicht oder nicht; und
eine Warnvorrichtung (W), welche operativ ist bzw. arbeitet, um einen Insassen zu warnen, wenn die Spurabweichung durch die eine Spurabweichung bestimmende Vorrichtung (11) bestimmt ist bzw. wird, **dadurch gekennzeichnet, daß**
die Warnvorrichtung (W) eine Regel- bzw. Steuervorrichtung (13) umfaßt, welche operativ ist bzw. arbeitet, um wenigstens eine Gurtaufrollvorrichtung (8) zu betätigen, welche einen Sitz- bzw. Sicherheitsgurt (22) aufrollen kann, welcher dem Insassen zur Verfügung gestellt ist, um eine bestimmte Spannung an den Sicherheitsgurt (22) anzulegen, wenn die Spurabweichung des Fahrzeugs (C) durch die eine Spurabweichung bestimmende Vorrichtung (11) bestimmt ist, und die Warnvorrichtung (W) den Insassen durch ein Betätigen der Gurtaufrollvorrichtung (8) warnt, um die bestimmte Spannung an den Sicherheitsgurt (22) des Insassen bei der Betätigung der Gurtaufrollvorrichtung (8) anzulegen.

2. Spurabweichwarnvorrichtung für ein Fahrzeug (C) nach Anspruch 1, weiterhin umfassend eine eine kritische Bedingung bzw. Zustand bestimmende Vorrichtung (12), welche arbeitet, um im voraus zu bestimmen, ob das Fahrzeug (C) eine kritische Bedingung bzw. einen kritischen Zustand aufweisen wird oder nicht, und zwar nachdem das Fahrzeug (C) von der Spur (51, TL) abweicht, wenn die Spurabweichung des Fahrzeugs (C) durch die eine Spurabweichung bestimmende Vorrichtung (11) bestimmt ist bzw. wird,
wobei die Regel- bzw. Steuervorrichtung (13) so aufgebaut ist, um die Gurtaufrollvorrichtung (8) zu betätigen, wenn durch die eine kritische Bedingung bestimmende Vorrichtung (12) bestimmt ist bzw. wird, daß das Fahrzeug (C) den kritischen Zustand aufweisen wird, wodurch die Warnvorrichtung (W) den Insassen durch ein Anlegen der bestimmten Spannung an den Sicherheitsgurt (22) warnt, wenn durch die eine kritische Bedingung bestimmende Vorrichtung (12) bestimmt ist bzw. wird, daß das Fahrzeug (C) die kritische Bedingung aufweisen wird.

3. Spurabweichwarnvorrichtung für ein Fahrzeug (C) nach Anspruch 2, wobei die eine kritische Bedingung bestimmende Vorrichtung (12) aufgebaut ist, um im voraus zu bestimmen, ob das Fahrzeug (C) die kritische Bedingung aufweisen wird oder nicht, indem bestimmt wird, ob ein Risiko eines Auftretens eines Fahrzeugüberschlags, nachdem das Fahrzeug (C) von der Spur abweicht, hoch ist oder nicht.

4. Spurabweichwarnvorrichtung für ein Fahrzeug (C) nach Anspruch 2 oder 3, wobei die Warnvorrichtung (W) aufgebaut ist, um ein Anlegen der bestimmten Spannung an den Sicherheitsgurt (22) aufrecht zu erhalten, zumindest bis durch die eine Spurabweichung bestimmende Vorrichtung (11) bestimmt ist, daß das Fahrzeug (C) nicht von der Spur (51) abweicht.

5. Spurabweichwarnvorrichtung für ein Fahrzeug (C) nach einem der Ansprüche 2 bis 4, wobei eine Bildaufnahmevorrichtung (5) zur Verfügung gestellt ist, welche operativ ist, um ein Bild von wenigstens einem Teil der Straße im wesentlichen vor dem Fahrzeug (C) aufzunehmen bzw. zu erfassen, und die eine kritische Bedingung bestimmende Vorrichtung (12) aufgebaut ist, um im voraus basierend auf dem durch die Bildaufnahmevorrichtung (5) aufgenommenen Bild zu bestimmen, ob das Fahrzeug (C) die kritische Bedingung aufweisen wird oder nicht.

6. Spurabweichwarnvorrichtung für ein Fahrzeug (C) nach Anspruch 5, wobei die eine kritische Bedingung bestimmende Vorrichtung (12) aufgebaut ist, um im voraus, basierend auf dem durch die Bildaufnahmevorrichtung (5) aufgenommenen Bild, zu bestimmen, ob das Fahrzeug (C) die kritische Bedingung aufweisen wird oder nicht, welches ein Bild über bzw. um die Straße ist, wo das Fahrzeug (C) nach der Spurabweichung fahren wird.

7. Spurabweichwarnvorrichtung für ein Fahrzeug (C) nach Anspruch 5 oder 6, wobei eine eine Fahrzeuggeschwindigkeit detektierende Vorrichtung (3) zur Verfügung gestellt ist, welche operativ ist, um eine Fahrzeugfahrgeschwindigkeit zu detektieren, und die eine kritische Bedingung bestimmende Vorrichtung (12) aufgebaut ist, um im voraus, basierend auf dem durch die Bildaufnahmevorrichtung (5) aufgenommenen Bild und der Fahrzeugfahrgeschwindigkeit durch die eine Fahrzeuggeschwindigkeit detektierende Vorrichtung (3), zu bestimmen, ob das Fahrzeug (C) die kritische Bedingung aufweisen wird oder nicht.

8. Spurabweichwarn-Steuer- bzw. -Regelverfahren für ein Fahrzeug (C), umfassend die folgenden Schritte:
einen eine relative Position detektierenden Schritt eines Detektierens einer Position des Fahrzeugs (C), welches auf einer Straße fährt, in bezug auf eine Spur bzw. Fahrspur (51, TL) in einer Breitenrichtung (WD);
einen eine Spurabweichung bestimmenden Schritt, welcher basierend auf der relativen Position, welche in dem die relative Position detektierenden Schritt detektiert wird, bestimmt, ob das fahrende Fahrzeug (C) von der Spur (51, TL) abweicht oder nicht;
einen Warnschritt eines Warnens eines Insassen, wenn die Spurabweichung in dem eine Spurabweichung bestimmenden Schritt bestimmt wird, **dadurch gekennzeichnet, daß**
der Warnschritt einen Schritt eines Betätigens wenigstens einer Gurtaufrollvorrichtung (8) umfaßt, welche einen Sitz- bzw. Sicherheitsgurt (22) aufrollen kann, welcher dem Insassen vorgesehen bzw. zur Verfügung gestellt wird, um eine bestimmte Spannung an den Sicherheitsgurt (22) anzulegen, wenn die Spurabweichung des Fahrzeugs (C) in dem eine Spurabweichung bestimmenden Schritt bestimmt wird, und wobei der Insasse durch ein Betätigen der Gurtaufrollvorrichtung (8) gewarnt wird, um die bestimmte Spannung an den Sicherheitsgurt (22) des Insassen mit der Betätigung der Gurtaufrollvorrichtung (8) anzulegen.

9. Spurabweichwarnverfahren für ein Fahrzeug (C) nach Anspruch 8, weiterhin umfassend einen eine kritische Bedingung bzw. Zustand bestimmenden Schritt eines Bestimmens im voraus, ob das Fahrzeug (C) eine kritische Bedingung bzw. einen kritischen Zustand aufweisen wird oder nicht, und zwar nachdem das Fahrzeug (C) von der Spur (51, TL) abweicht, wenn die Spurabweichung des Fahrzeugs (C) in dem eine Spurabweichung bestimmenden Schritt bestimmt wird,
wobei die Gurtaufrollvorrichtung (8) betätigt wird, wenn in dem die kritische Bedingung bestimmenden Schritt bestimmt wird, daß das Fahrzeug (C) die kritische Bedingung aufweisen wird, wodurch der Insasse durch ein Anlegen der bestimmten Spannung an den Sicherheitsgurt (22) gewarnt wird, wenn durch die eine kritische Bedingung bestimmende Vorrichtung (12) bestimmt wird, daß das Fahrzeug (C) die kritische Bedingung bzw. den kritischen Zustand aufweisen wird.

10. Computerprogrammprodukt, umfassend computerlesbare Instruktionen, welches, wenn auf ein geeignetes System geladen und auf diesem durchgeführt, die Schritte eines Spurabweichwarnverfahrens für ein Fahrzeug (C) gemäß Anspruch 8 oder 9 durchführen kann.

## Revendications

1. Dispositif d'avertissement de déviation en dehors de la voie pour un véhicule (C) comprenant :
- un dispositif de détection de la position relative (2), agissant de manière à détecter une position du véhicule (C) se déplaçant sur une route, relativement à une voie (51, TL) dans une direction de largeur (WD) ;
- un dispositif de détermination de la déviation en dehors de la voie (11), agissant de manière à déterminer si le véhicule (C) en déplacement dévie ou non de la voie (51, TL), sur la base de la position relative détectée par ledit dispositif de détection de la position relative (2) ; et
- un dispositif d'avertissement (W), agissant de manière à avertir un passager lorsque la déviation en dehors de la voie est déterminée par ledit dispositif de détermination de la déviation en dehors de la voie (11),
**caractérisé en ce que** ledit dispositif d'avertissement (W) comprend un dispositif de commande (13), agissant de manière à faire fonctionner au moins un enrouleur de ceinture (8) qui peut enrouler une ceinture de siège (22) à condition que le passager applique une tension spécifiée sur la ceinture de siège (22) lorsque la déviation en dehors de la voie du véhicule (C) est déterminée par ledit dispositif de détermination de la déviation en dehors de la voie (11), et **en ce que** ledit dispositif d'avertissement (W) avertit le passager en faisant fonctionner l'enrouleur de ceinture (8) pour appliquer la tension spécifiée sur la ceinture de siège (22) du passager par le fonctionnement dudit enrouleur de ceinture (8).

2. Dispositif d'avertissement de déviation en dehors de la voie pour un véhicule (C) selon la revendication 1, comprenant en plus un dispositif de détermination de la condition critique (12), agissant de manière à déterminer à l'avance si le véhicule (C) présentera ou non une condition critique après que le véhicule (C) dévie en dehors de la voie (51, TL) lorsque la déviation en dehors de la voie du véhicule (C) est déterminée par ledit dispositif de détermination de la déviation en dehors de la voie (11),
dans lequel ledit dispositif de commande (13) est constitué de manière à faire fonctionner ledit enrouleur de ceinture (8) lorsque ledit dispositif de détermination de la condition critique (12) a déterminé que le véhicule (C) présentera la condition critique, sachant que ledit dispositif d'avertissement (W) avertit le passager en appliquant la tension spécifiée sur la ceinture de siège (22) lorsque ledit dispositif de détermination de la condition critique (12) a déterminé que le véhicule (C) présentera la condition critique.

3. Dispositif d'avertissement de déviation en dehors de la voie pour un véhicule (C) selon la revendication 2, dans lequel ledit dispositif de détermination de la condition critique (12) est constitué de manière à déterminer à l'avance si le véhicule (C) présentera ou non la condition critique, en déterminant si un risque qu'il se produise un capotage de véhicule après que le véhicule (C) dévie en dehors de la voie, est élevé ou non.

4. Dispositif d'avertissement de déviation en dehors de la voie pour un véhicule (C) selon l'une ou l'autre des revendications 2 et 3, dans lequel ledit dispositif d'avertissement (W) est constitué de manière à garder l'application de la tension spécifiée sur la ceinture de siège (22), au moins jusqu'à ce que ledit dispositif de détermination de la déviation en dehors de la voie (11) ait déterminé que le véhicule (C) ne dévie pas en dehors de la voie (51).

5. Dispositif d'avertissement de déviation en dehors de la voie pour un véhicule (C) selon l'une quelconques des revendications 2 à 4, dans lequel est prévu un dispositif de prises de vue (5), agissant de manière à faire une prise de vue d'au moins une partie de la route essentiellement à l'avant du véhicule (C), et dans lequel ledit dispositif de détermination de la condition critique (12) est constitué de manière à déterminer à l'avance si le véhicule (C) présentera ou non la condition critique, en se basant sur la prise de vue faite par le dispositif de prise de vues (5).

6. Dispositif d'avertissement de déviation en dehors de la voie pour un véhicule (C) selon la revendication 5, dans lequel ledit dispositif de détermination de la condition critique (12) est constitué de manière à déterminer à l'avance si le véhicule (C) présentera ou non la condition critique, en se basant sur la prise de vue faite par ledit dispositif de prise de vues (5) qui est une prise de vue autour de la route où le véhicule (C) va se déplacer après la déviation en dehors de la voie.

7. Dispositif d'avertissement de déviation en dehors de la voie pour un véhicule (C) selon l'une ou l'autre des revendications 5 et 6, dans lequel est prévu un dispositif de détection de la vitesse du véhicule (3), agissant de manière à détecter une vitesse de déplacement du véhicule et dans lequel ledit dispositif de détermination de la condition critique (12) est constitué de manière à déterminer à l'avance si le véhicule (C) présentera ou non la condition critique, en se basant sur la prise de vue faite par ledit dispositif de prise de vues (5) ainsi que sur la vitesse de déplacement du véhicule détectée par ledit dispositif de détection de la vitesse du véhicule (3).

8. Méthode de commande d'avertissement de déviation en dehors de la voie pour un véhicule (C), comprenant les étapes suivantes :
- une étape de détection de la position relative, consistant à détecter une position du véhicule (C) se déplaçant sur une route, relativement à une voie (51, TL) dans une direction de largeur (WD) ;
- une étape de détermination de déviation en dehors de la voie, consistant à déterminer si le véhicule (C) en déplacement dévie ou non de la voie (51, TL), sur la base de la position relative détectée dans ladite étape de détection de la position relative ;
- une étape d'avertissement, consistant à avertir un passager lorsque la déviation en dehors de la voie est déterminée dans ladite étape de détermination de déviation en dehors de la voie,
**caractérisée en ce que** ladite étape d'avertissement comprend une étape consistant à faire fonctionner au moins un enrouleur de ceinture (8) qui peut enrouler une ceinture de siège (22) à condition que le passager applique une tension spécifiée sur la ceinture de siège (22) lorsque la déviation en dehors de la voie du véhicule (C) est déterminée dans ladite étape de détermination de déviation en dehors de la voie, et dans laquelle le passager est averti par le fonctionnement de l'enrouleur de ceinture (8) pour appliquer la tension spécifiée sur la ceinture de siège (22) du passager avec le fonctionnement dudit enrouleur de ceinture (8).

9. Méthode d'avertissement de déviation en dehors de la voie pour un véhicule (C) selon la revendication 8, comprenant en outre une étape de détermination de la condition critique, consistant à déterminer à l'avance si le véhicule (C) présentera ou non une condition critique après que le véhicule (C) dévie en dehors de la voie (51, TL) lorsque la déviation en dehors de la voie du véhicule (C) est déterminée dans ladite étape de détermination de déviation en dehors de la voie,
dans laquelle ledit enrouleur de ceinture (8) est actionné lorsque le fait est déterminé dans ladite étape de détermination de la condition critique que le véhicule (C) présentera la condition critique, sachant que le passager est averti par l'application de la tension spécifiée sur la ceinture de siège (22) lorsque le fait est déterminé par ledit dispositif de détermination de la condition critique (12) que le véhicule (C) présentera la condition critique.

10. Produit de programme informatique, comprenant des instructions lisibles par un ordinateur, lequel, lorsqu'il est chargé et tourne sur un système approprié, peut accomplir les étapes d'une méthode d'avertissement de déviation en dehors de la voie pour un véhicule (C) selon l'une ou l'autre des revendications 8 et 9.
